# EUROPÄISCHE PATENTSCHRIFT

(11) **EP 3 197 582 B1**
(45) Veröffentlichungstag und Bekanntmachung des Hinweises auf die Patenterteilung: **20.10.2021**
(21) Anmeldenummer: 15750925.8
(22) Anmeldetag: 28.07.2015
(51) Int. Cl.: B01D 36/00

(54) **VORRICHTUNG ZUR ENTLÜFTUNG UND INTEGRITÄTSTESTUNG**
DEVICE FOR VENTILATION AND INTEGRITY TESTING
DISPOSITIF DE PURGE D'AIR ET DE VÉRIFICATION DE L'INTÉGRITÉ

(30) Priorität: 22.09.2014 DE 102014113638
(43) Veröffentlichungstag der Anmeldung: 02.08.2017
(73) Patentinhaber: Sartorius Stedim Biotech GmbH, 37079 Göttingen (DE)
(72) Erfinder: DIEL, Bernhard, 37127 Dransfeld (DE)
(74) Vertreter: Vigand, Philippe
(86) Internationale Anmeldenummer: PCT/EP2015/001551
(87) Internationale Veröffentlichungsnummer: WO 2016/045762

(56) Entgegenhaltungen:
- DE-A1-102010 008 524
- DE-U1- 9 407 371
- US-A- 4 909 937

## Beschreibung

### Gebiet der Erfindung

Die Erfindung betrifft eine Vorrichtung zur Entlüftung und Integritätstestung einer mit Druck beaufschlagbaren Filtereinheit, die ein in einem Gehäuse zwischen einem Einlass und einem Auslass angeordnetes Filterelement aufweist, wobei das Gehäuse über einen mit dem Gehäuseinnenraum in Verbindung stehenden Luftfilter entlüftbar ist, wobei dem Luftfilter zum Gehäuseinnenraum hin ein Filterventil vorgelagert ist, über das der Luftfilter mit dem Gehäuseinnenraum in Verbindung steht, wobei der Luftfilter auf seiner dem Gehäuseinnenraum abgewandten Seite mit einer Testleitung zur Beaufschlagung mit Druck verbindbar ist, und wobei dem Einlass ein Einlassventil vorgelagert ist, über das der Gehäuseinnenraum mit einer Einlassleitung in Verbindung steht.

### Stand der Technik

Aus der DE 10 2010 008 524 A1 ist eine Vorrichtung zur Integritätsprüfung einer mit Druck beaufschlagbaren Filtereinheit bekannt. In der Vorrichtung sind in einem Gehäuse mit einem Einlass und einem Auslass mehrere Filterelemente angeordnet, wobei der Gehäusekopf über ein Ventil und einen Gasfilter mit Druckluft beaufschlagt oder entlüftet werden kann. In einer Einlassleitung ist ein Ventil angeordnet, über das die Einlassleitung mit dem Gehäuse in Verbindung steht. Die Vorrichtung weist neben einem Filtratauslass zwei Zugänge zum Gehäuseinnenraum auf, nämlich einen Zugang zur Zuleitung von zu filtrierender Flüssigkeit und einen Zugang zur Zuleitung des Testmediums und zur Ableitung von Gas bzw. Luft, also zur Entlüftung.

Aus der DE 43 21 927 A1 ist eine mit Druck beaufschlagbare Filtereinheit bekannt, die ein in einem Gehäuse zwischen einem Einlass und einem Auslass angeordnetes Filterelement aufweist. Das Gehäuse ist dabei in vertikaler Richtung oben über einen hydrophoben Luftfilter entlüftbar.

Nachteilig bei der bekannten Vorrichtung, die sich grundsätzlich bewährt hat, ist, dass der notwendige Testdruck für einen Integritätstest über die Einlassleitung an Stelle der zu filtrierenden Flüssigkeit zugeführt wird. Dadurch besteht die Gefahr, dass die zur Integritätstestung (IT- Testung) des Flüssigkeitsfilters in das System gepresste Luft zu einer unerwünschten Kontamination von außen führt. Um eine solche Kontamination auszuschließen, ist bei den Filtereinheiten aus dem Stand der Technik ein weiterer Luft-Sterilfilter nötig, über den die Luft für die IT-Testung zugeführt werden muss.

Da das gesamte Filter- und Leitungssystem in der Regel als geschlossene vorsterilisierte Einheit vorassembliert zum Einsatz kommt, ergeben sich hieraus diverse weitere Nachteile bzgl. eines solchen Aufbaues.

Es müssten im Bereich des Einlasses z.B. starre nicht ausdehnbare Druckleitungen aus Kunststoff an Stelle von dehnbaren Schlauchleitungen verwendet werden, damit eine präzise IT-Testung überhaupt möglich ist. Eine solche rigide Kunststoffvorrichtung würde den eingangsseitigen Raum volumetrisch vergrößern, was wiederum einen entscheidenden Nachteil darstellt, da in der Regel hochwertige Flüssigkeiten filtriert werden sollen, die eine möglichst geringe Vermischung mit Spülflüssigkeit erfordern.

### Aufgabenstellung

Es ist die Aufgabe der vorliegenden Erfindung, die bekannte Vorrichtung so zu verbessern, dass mit geringem verfahrens- und materialtechnischem Aufwand, mit geringem Volumen, kostengünstig und sicher eine unerwünschte Kontamination verhindert wird.

### Darlegung der Erfindung

Diese Aufgabe wird in Verbindung mit den Merkmalen des Oberbegriffs von Anspruch 1 dadurch gelöst, dass das Einlassventil zum Gehäuse hin ein Anschlussstück aufweist, dass das Anschlussstück über einen Abzweig mit dem Filterventil und dem Luftfilter verbunden ist, und dass das Einlassventil, das Filterventil und der Luftfilter eine Entlüftungseinheit bilden, die mit ihrem Anschlussstück mit einem Einlassanschluss des Gehäuses verbindbar ist.

Dadurch, dass dem Luftfilter ein Filterventil zum Gehäuseinnenraum hin vorgelagert ist, kann auf der dem Gehäuseinnenraum abgewandten Seite des Luftfilters eine Testleitung zur Beaufschlagung des Filterelements bzw. des Flüssigkeitsfilters angeschlossen werden. Außerdem ist es möglich, während des Filtrationsprozesses von Fluiden das Filterventil zu schließen und zu vermeiden, dass der Luftfilter mit zu filtrierendem und unter Druck stehendem Fluid in Kontakt kommt und den Luftfilter benetzt. Bei der Integritätstestung (IT-Testung) des Flüssigkeitsfilters ist dadurch sichergestellt, dass die in das System gepresste Luft über das integrierte Luftfilterelement steril filtriert und somit eine Kontamination von außen vermieden wird.

Dadurch, dass das Einlassventil zum Gehäuse hin ein Anschlussstück aufweist und das Anschlussstück über einen Abzweig mit dem Filterventil und dem Luftfilter verbunden ist, bilden das Einlassventil, das Filterventil und der Luftfilter eine Entlüftungseinheit, die mit ihrem Anschlussstück mit einem Einlassanschluss des Gehäuses verbindbar ist.

Das Anschlussstück und der Abzweig können dabei als ein T-Stück ausgebildet sein, bei dem der Abzweig im rechten Winkel vom Anschlussstück abzweigt.

Die Entlüftungseinheit, welche das Einlassventil, das Filterventil und den Luftfilter umfasst und mit ihrem Anschlussstück mit dem Einlassanschluss des Gehäuses verbindbar ist, hat den Vorteil, dass sie mit der Filtereinheit nicht fest verbunden sein muss, sondern separat angekoppelt werden kann. Mit der so gebildeten Entlüftungseinheit können zudem auch bereits bekannte Filtereinheiten oder Filterkapsulen variabler Bauform bezgl. des Gehäuses und des Gehäuseinnenraums zu der erfindungsgemäßen Vorrichtung nachgerüstet werden. Die Bauform der Filtereinheit kann durch die Kombination mit der separaten Entlüftungseinheit dahingehend vereinfacht werden, dass die Filtereinheit selbst keinen Luftfilter mit dazugehörigem Anschluss und keine vom Luftfilter separate Einlassleitung für Fluid aufweisen muss, sondern lediglich einen einzigen Einlassanschluss für die Verbindung mit der Entlüftungseinheit.

Bevorzugte Ausführungsformen sind Gegenstand der abhängigen Ansprüche.

Gemäß einer bevorzugten Ausführungsform der Erfindung ist der Luftfilter als ein hydrophober Filter ausgebildet.

Dadurch kann die Luft aus dem Gehäuseinnenraum, d.h. dem Kopfraum des Gehäuses, solange über den hydrophoben Filter in die Atmosphäre entweichen, bis der Flüssigkeitsspiegel den Luftfilter erreicht hat. Der Flüssigkeitsstrom würde dann aufgrund der Hydrophobie des Luftfilters abrupt gestoppt werden, wenn die Flüssigkeit an der Oberfläche des Luftfilters angelangt ist.

Ein Austreten von Flüssigkeit aus der Vorrichtung in die Atmosphäre ist somit unterbunden, da der Luftfilter für die Flüssigkeit nicht oder nur bei sehr viel höherem Druck durchlässig ist. Bei vertikaler Ausrichtung der Filtereinheit würde die Luft, die sich immer am höchsten Punkt ansammelt, automatisch zum Luftfilter gelangen. Der Luftfilter ist als gasdurchlässiger Sterilfilter ausgebildet.

Diese Funktion kann zum einen während der Befüllung des Filtergehäuses Anwendung finden, gleichzeitig aber auch im Laufe des Filtrationsprozesses; sozusagen als permanente automatische Entlüftungsfunktion. Diese automatische "In-Prozess-Entlüftung" ist besonders dann sinnvoll, wenn sich z.B. durch Luftblasen im Zuleitungssystem die Luft im Filtergehäuse ansammeln kann.

Gemäß einer weiteren bevorzugten Ausführungsform der Erfindung steht das Filterventil über den Einlass mit dem Gehäuseinnenraum in Verbindung. Dadurch wird lediglich ein Zugang zum Gehäuseinnenraum benötigt, sowohl zur Zuleitung von zu filtrierender Flüssigkeit, zur Zuleitung des Testmediums und zur Ableitung von Gas bzw. Luft, also zur Entlüftung.

Nach einer weiteren bevorzugten Ausführungsform der Erfindung sind der Einlassanschluss der Entlüftungseinheit und der Einlassanschluss der Filtereinheit über eine sogenannte "Tri-Clamp"-Verbindung, über einen Flanschstutzen, wie sie beispielsweise aus der DIN 32676 bekannt sind, oder andere Konnektoren, miteinander verbindbar. Dies ermöglicht eine einfache und sichere Verbindung der Entlüftungseinheit mit der Filtereinheit und eine weitere konstruktive Vereinfachung der Filtereinheit, welche über einen standardisierten oder genormten Flanschstutzen mit der Entlüftungseinheit verbunden werden kann.

Nach einer weiteren Ausführungsform der Erfindung ist die Entlüftungseinheit als einteiliges Bauteil ausgelegt, welches die Einlassleitung für den Einlass des Gehäuses der Filtereinheit, das Einlassventil, das Anschlussstück, das T-Stück, das Filterventil, die Abzweigleitung, den Luftfilter, den Anschluss für den Luftfilter und den Einlassanschluss für die Entlüftungseinheit als fest in die Entlüftungseinheit installierte Komponenten umfasst.

Gemäß einer weiteren Ausführungsform der Erfindung sind das Einlassventil und/oder das Filterventil durch eine manuelle oder automatische Ventilschaltung steuerbar.

Die automatische Ventilschaltung bietet den Vorteil, dass das Einlassventil und/oder das Filterventil an elektrische oder pneumatische Antriebe anschließbar sind, wodurch eine voll- oder teilautomatische Ventilschaltung gekoppelt an ein Softwaresystem ermöglicht wird.

Bei einer weiteren Ausführungsform der Erfindung ist das einteilige Bauteil, welches die Entlüftungseinheit bildet, fest in die Filtereinheit integriert.

Bei einer alternativen Ausführungsform der Erfindung bilden die Einlassleitung für den Einlass des Gehäuses der Filtereinheit und das Einlassventil ein separates Bauteil, welches über das als separates Bauteil ausgelegte T-Stück mit einem weiteren separaten Bauteil, welches die Abzweigleitung, das Filterventil und den Luftfilter umfasst, verbindbar ist, wobei alle Bauteile über "Tri-Clamp"-Verbindungen zu einer Entlüftungseinheit assemblierbar sind.

Gemäß einer weiteren bevorzugten Ausführungsform der Erfindung ist die Filtereinheit als eine Filterkapsule zum Einmalgebrauch ausgebildet. Entsprechend ist auch die Entlüftungseinheit zum Einmalgebrauch ausgebildet. Dadurch kann die Vorrichtung nach Gebrauch sicher und einfach entsorgt werden.

Nach einer weiteren bevorzugten Ausführungsform der Erfindung ist die Vorrichtung zum Einmalgebrauch sterilisiert in einer Sterilverpackung liefer- und lagerbar. Dadurch ist ihre Handhabung nicht nur einfach, sondern auch sicher vor Kontaminationen.

Weitere Merkmale und Vorteile der Erfindung ergeben sich aus der nachfolgenden speziellen Beschreibung und den Zeichnungen.

### Kurzbeschreibung der Zeichnungen

Es zeigen:
- Figur 1:: eine nicht erfindungsgemässe schematische Darstellung einer Vorrichtung zur Entlüftung und Integritätstestung;
- Figur 2:: eine schematische Darstellung einer Vorrichtung zur Entlüftung und Integritätstestung, bei der das Einlassventil, das Filterventil und der Luftfilter eine Entlüftungseinheit bilden, die mit ihrem Anschlussstück mit einem Einlassanschluss des Gehäuses verbunden ist;
- Figur 3:: eine schematische Darstellung der Entlüftungseinheit von Figur 2 und
- Figur 4:: eine schematische Darstellung der Filtereinheit von Figur 2.

### Beschreibung bevorzugter Ausführungsformen

Eine Vorrichtung 1 zur Entlüftung und Integritätstestung besteht im Wesentlichen aus einer Filtereinheit 2, einem Luftfilter 3, einem Filterventil 4 und einem Einlassventil 5.

Die mit Druck beaufschlagbare Filtereinheit 2 besteht aus einem Gehäuse 6 und einem zwischen einem Einlass 7 und einem Auslass 8 angeordneten Filterelement 9, das als ein Filter zum Filtrieren von Flüssigkeiten ausgebildet ist.

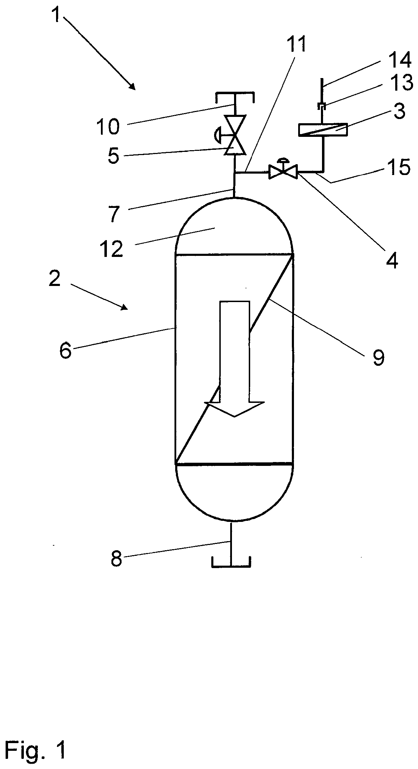

Entsprechend dem nicht erfindungsgemässen Ausführungsbeispiel von Figur 1 weist der Einlass 7 eine Einlassleitung 10 auf, in der das dem Einlass 7 und damit dem Gehäuse 6 vorgelagerte Einlassventil 5 angeordnet ist. In der Einlassleitung 10 ist zwischen dem Gehäuse 6 und dem Einlassventil 5 ein Abzweig 11 angeordnet, der über das Filterventil 4 den Luftfilter 3, der als ein hydrophober Filter ausgebildet ist, mit dem Gehäuseinnenraum 12 des Gehäuses 6 verbindet. Auf der dem Filterventil 4 abgewandten Seite weist der Luftfilter 3 eine Testleitung 14 mit einem Anschluss 13 auf, über welchen der hydrophobe Luftfilter 3 mit der Testleitung 14 und mit einer nicht dargestellten Integritätstesteinrichtung verbunden ist. Der Luftfilter 3 ist über eine Abzweigleitung 15, über das in der Abzweigleitung 15 angeordnete Filterventil 4 und über die Einlassleitung 10 mit dem Gehäuseinnenraum 12 verbunden.

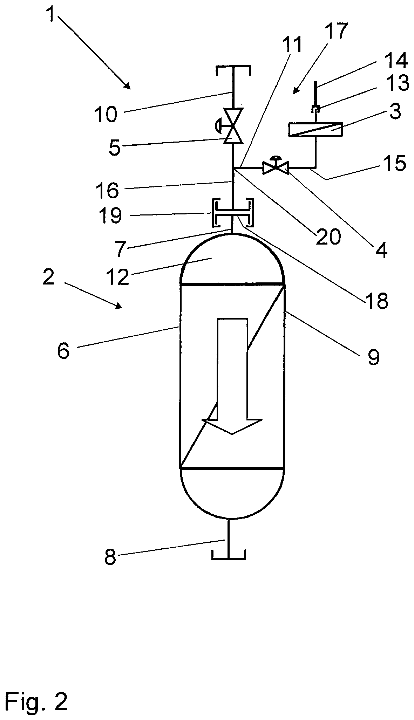

Entsprechend dem Ausführungsbeispiel der Figur 2 weist das Einlassventil 5 zum Gehäuse 6 hin, ein Anschlussstück 16 auf, das über den Abzweig 11 mit dem Filterventil 4 und dem Luftfilter 3 verbunden ist. Dabei bilden das Einlassventil 5, das Filterventil 4 und der Luftfilter 3 eine Entlüftungseinheit 17. Die Entlüftungseinheit 17 ist über ihr Anschlussstück 16 und über den Einlassanschluss 21 mit einem Einlassanschluss 18 des Gehäuses 6 über eine sogenannte Tri-Clamp-Verbindung (siehe DIN 32676) 19, einen Flanschstutzen, einen Steril-Konnektor mit männlichem und weiblichem Teil oder einen anderen Schnellverschluss verbindbar. Das Anschlussstück 16 und der Abzweig 11 sind entsprechend Figur 2 als ein T-Stück 20 ausgebildet, bei dem der Abzweig 11 im rechten Winkel vom Anschlussstück 16 abzweigt. Bei anderen Ausführungsformen zweigt der Abzweig 11 in anderen Winkeln vom Anschlussstück 16 ab, z. B. in einem 45°-Winkel.

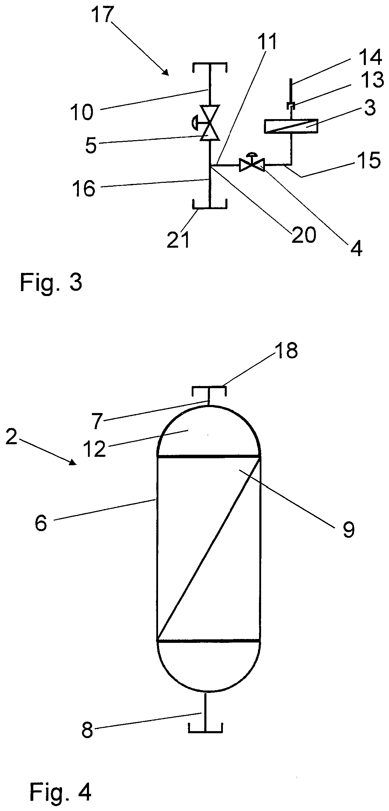

Gemäß des Ausführungsbeispiels der Figur 3 kann die Entlüftungseinheit (17) als einteiliges Bauteil ausgelegt sein, welches die Einlassleitung (10) für den Einlass (7) des Gehäuses (6) der Filtereinheit (2), das Einlassventil (5), das Anschlussstück (16), das T-Stück (20), das Filterventil (4), die Abzweigleitung (15), den Luftfilter (3), den Anschluss für den Luftfilter (13) und den Einlassanschluss (21) für die Entlüftungseinheit (17) als fest in die Entlüftungseinheit installierte Komponenten umfasst.

Gemäß einer weiteren Ausführungsform der Erfindung sind das Einlassventil (5) und/oder das Filterventil (4) durch eine nicht dargestellte manuelle oder automatische Ventilschaltung steuerbar.

Die vorgenannte automatische Ventilschaltung bietet den Vorteil, dass das Einlassventil (5) und/oder das Filterventil (4) an nicht dargestellte elektrische oder pneumatische Antriebe anschließbar sind, wodurch eine voll- oder teilautomatische Ventilschaltung gekoppelt an ein Softwaresystem ermöglicht wird.

Bei einer weiteren Fortbildung der Erfindung ist das einteilige Bauteil, welches die Entlüftungseinheit (17) bildet, fest in die Filtereinheit (2) integriert.

Bei einer alternativen Ausführungsform der Figur 3 bilden die Einlassleitung (10) für den Einlass (7) des Gehäuses (6) der Filtereinheit (2) und das Einlassventil (5) ein separates Bauteil, welches über das als separates Bauteil ausgelegte T-Stück (20) mit einem weiteren separaten Bauteil, welches die Abzweigleitung (15), das Filterventil (4) und den Luftfilter (3) umfasst, verbindbar ist, wobei alle Bauteile über "Tri-Clamp"-Verbindungen zu einer Entlüftungseinheit (17) assemblierbar sind.

Die Filtereinheit 2 und die Entlüftungseinheit 17 sind zum Einmalgebrauch ausgebildet und vorgesehen.

Die Vorrichtung 1 ist sterilisiert in einer nicht dargestellten Sterilverpackung liefer- und lagerbar.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben.

### Bezugszeichenliste

- 1: Vorrichtung zur Entlüftung und Integritätstestung
- 2: Filtereinheit
- 3: Luftfilter
- 4: Filterventil
- 5: Einlassventil
- 6: Gehäuse von 2
- 7: Einlass von 6
- 8: Auslass von 6
- 9: Filterelement von 2
- 10: Einlassleitung von 7
- 11: Abzweig von 10
- 12: Gehäuseinnenraum von 6
- 13: Anschluss von 3
- 14: Testleitung
- 15: Abzweigleitung
- 16: Anschlussstück
- 17: Entlüftungseinheit
- 18: Einlassanschluss von 2
- 19: Tri-Clamp-Verbindung
- 20: T-Stück
- 21: Einlassanschluss von 17

## Patentansprüche

1. Vorrichtung (1)
zur Entlüftung und
Integritätstestung einer mit Druck beaufschlagbaren Filtereinheit (2), umfassend ein Gehäuse (6) mit zwischen einem Einlass (7) und einem Auslass (8) angeordneten Filterelement (9) sowie einen Luftfilter (3), wobei das Gehäuse (6) über den
mit dem Gehäuseinnenraum (12) in Verbindung stehenden Luftfilter (3) entlüftbar ist,
wobei dem Luftfilter (3) zum Gehäuseinnenraum (12) hin ein Filterventil (4) vorgelagert ist, über das der Luftfilter (3) mit dem Gehäuseinnenraum (12) in Verbindung steht,
wobei der Luftfilter (3) auf seiner dem Gehäuseinnenraum (12) abgewandten Seite mit einer Testleitung (14) zur Beaufschlagung mit Druck verbindbar ist, und wobei dem Einlass (7) ein Einlassventil (5) vorgelagert ist, über das der Gehäuseinnenraum (12) mit einer Einlassleitung (10) in Verbindung steht,
**dadurch gekennzeichnet,**
**dass** das Einlassventil (5) zum Gehäuse (6) hin ein Anschlussstück (16) aufweist, dass das Anschlussstück (16) über einen Abzweig (11) mit dem Filterventil (4) und dem Luftfilter (3) verbunden ist, und
**dass** das Einlassventil (5), das Filterventil (4) und der Luftfilter (3) eine Entlüftungseinheit (17) bilden, die mit ihrem Anschlussstück (16) mit einem Einlassanschluss (18) des Gehäuses (6) verbindbar ist.

2. Vorrichtung nach Anspruch 1,
**dadurch gekennzeichnet,**
**dass** der Luftfilter (3) als ein hydrophober Filter ausgebildet ist.

3. Vorrichtung nach Anspruch 1 oder 2,
**dadurch gekennzeichnet,**
**dass** das Filterventil (4) über den Einlass (7) mit dem Gehäuseinnenraum (12) in Verbindung steht.

4. Vorrichtung nach einem der Ansprüche 1 bis 3,
**dadurch gekennzeichnet,**
**dass** Anschlussstück (16) und der Abzweig (11) als ein T-Stück (20) ausgebildet sind, wobei der Abzweig (11) im rechten Winkel vom Anschlussstück (16) abzweigt.

5. Vorrichtung nach einem der Ansprüche 1 bis 4,
**dadurch gekennzeichnet,**
**dass** der Einlassanschluss (21) der Entlüftungseinheit (17) und der Einlassanschluss (18) der Filtereinheit (2) über eine Tri-Clamp-Verbindung (19), über einen Flanschstutzen oder einen Konnektor miteinander verbindbar sind.

6. Vorrichtung nach einem der Ansprüche 1 bis 5,
**dadurch gekennzeichnet,**
**dass** die Entlüftungseinheit (17) als einteiliges Bauteil ausgelegt ist, welches die Einlassleitung (10) für den Einlass (7) des Gehäuses (6) der Filtereinheit (2), das Einlassventil (5), das Anschlussstück (16), das T-Stück (20), das Filterventil (4), die Abzweigleitung (15), den Luftfilter (3), den Anschluss für den Luftfilter (13) und den Einlassanschluss (21) für die Entlüftungseinheit (17) als fest in die Entlüftungseinheit (17) installierte Komponenten umfasst.

7. Vorrichtung nach einem der Ansprüche 1 bis 5,
**dadurch gekennzeichnet,**
**dass** die Einlassleitung (10) für den Einlass (7) des Gehäuses (6) der Filtereinheit (2) und das Einlassventil (5) ein separates Bauteil bilden, welches über das als separates Bauteil ausgelegte T-Stück (20) mit einem weiteren separaten Bauteil, welches die Abzweigleitung (15), das Filterventil (4) und den Luftfilter (3) umfasst, verbindbar ist, wobei alle Bauteile über "Tri-Clamp"-Verbindungen zu der Entlüftungseinheit (17) assemblierbar sind.

8. Vorrichtung nach einem der Ansprüche 1 bis 7,
**dadurch gekennzeichnet,**
**dass** die Filtereinheit (2) als eine Filterkapsule zum Einmalgebrauch ausgebildet ist.

9. Vorrichtung nach einem der Ansprüche 1 bis 8,
**dadurch gekennzeichnet,**
**dass** die Entlüftungseinheit (17) zum Einmalgebrauch ausgebildet ist.

10. Vorrichtung nach einem der Ansprüche 1 bis 9,
**dadurch gekennzeichnet,**
**dass** der Luftfilter (3) als ein gasdurchlässiger Sterilfilter ausgebildet ist.

11. Vorrichtung nach einem der Ansprüche 1 bis 10,
**dadurch gekennzeichnet,**
**dass** die Vorrichtung zum Einmalgebrauch sterilisiert in einer Sterilverpackung lagerbar ist.

## Claims

1. A device (1) for ventilation and integrity testing of a filter unit (2) which can be pressurized, comprising a housing (6) with a filter element (9) arranged between an inlet (7) and an outlet (8) and an air filter (3), wherein the housing (6) can be ventilated via the air filter (3) connected to the housing interior (12), wherein a filter valve (4) is mounted upstream of the air filter (3) to the housing interior (12), said filter valve via which the air filter (3) is connected to the housing interior (12), wherein the air filter (3) can be connected to a test line (14) for applying pressure on the side facing away from the housing interior (12), and wherein an inlet valve (5) is mounted upstream of the inlet (7), via which the housing interior (12) is connected to an inlet line (10), **characterized in that** the inlet valve (5) has a connector piece (16) extending to the housing (6), **in that** the connector piece (16) is connected to the filter valve (4) and the air filter (3) via a branch (11), and **in that** the inlet valve (5), the filter valve (4) and the air filter (3) form a ventilation unit (17) which can be connected with its connector piece (16) to an inlet connection (18) of the housing (6).

2. The device according to claim 1, **characterized in that** the air filter (3) is embodied as a hydrophobic filter.

3. The device according to claim 1 or 2, **characterized in that** the filter valve (4) is connected via the inlet (7) to the housing interior (12).

4. The device according to any of claims 1 to 3, **characterized in that** the connector piece (16) and the brand (11) are embodied as a T-piece (20), wherein the branch (11) branches off at a right angle from the connector piece (16).

5. The device according to any of claims 1 to 4, **characterized in that** the inlet connection (21) of the ventilation unit (17) and the inlet connection (18) of the filter unit (2) can be connected to each other via a tri-clamp connection (19), via a flange connector or a connector.

6. The device according to any of claims 1 to 5, **characterized in that** the ventilation unit (17) is designed as a one-piece component which comprises the inlet line (10) for the inlet (7) of the housing (6) of the filter unit (2), the inlet valve (5), the connector piece (16), the T-piece (20), the filter valve (4), the branch line (15), the air filter (3), the connection for the air filter (13) and the inlet connection (21) for the ventilation unit (17) as components firmly installed in the ventilation unit (17).

7. The device according to any of claims 1 to 5, **characterized in that** the inlet line (10) for the inlet (7) of the housing (6) of the filter unit (2) and the inlet valve (5) form a separate component, which can be connected via the T-piece (20) designed as a separate component to a further separate component, which comprises the branch line (15), the filter valve (4) and the air filter (3), wherein all components can be assembled via "Tri-clamp" connections to the ventilation unit (17).

8. The device according to any of claims 1 to 7, **characterized in that** the filter unit (2) is embodied as a disposable filter capsule.

9. The device according to any of claims 1 to 8, **characterized in that** the ventilation unit (17) is disposable.

10. The device according to any of claims 1 to 9, **characterized in that** the air filter (3) is embodied as a gas-permeable sterile filter.

11. The device according to any of claims 1 to 10, **characterized in that** the device can be stored sterilized in a sterile package for single use.

## Revendications

1. Dispositif (1) destiné à purger et vérifier l'intégrité d'une unité de filtre (2) qui peut être sollicitée par pression, comprenant un logement (6) avec un élément de filtre (9) agencé entre une admission (7) et une évacuation (8) ainsi qu'un filtre à air (3), dans lequel le logement (6) peut être purgé via le filtre à air (3) en relation avec l'espace intérieur de logement (12),
dans lequel une valve de filtre (4) est montée en amont du filtre à air (3) en allant vers l'espace intérieur de logement (12), via laquelle le filtre à air (3) est en relation avec l'espace intérieur de logement (12),
dans lequel le filtre à air (3) peut être relié sur son côté opposé à l'espace intérieur de logement (12) avec une conduite de vérification (14) pour une sollicitation par pression, et
dans lequel une valve d'admission (5) est montée en amont de l'admission (7), via laquelle l'espace intérieur de logement (12) est en relation avec une conduite d'admission (10),
**caractérisé en ce que**
la valve d'admission (5) présente une pièce de raccordement (16) en allant vers le logement (6),
la pièce de raccordement (16) est reliée à la valve de filtre (4) et au filtre à air (3) via une bifurcation (11), et
la valve d'admission (5), la valve de filtre (4) et le filtre à air (3) forment une unité de purge (17) qui avec sa pièce de raccordement (16) peut être reliée à un raccordement d'admission (18) du logement (6).

2. Dispositif selon la revendication 1,
**caractérisé en ce que**
le filtre à air (3) est conçu en tant que filtre hydrophobe.

3. Dispositif selon la revendication 1 ou 2,
**caractérisé en ce que**
la valve de filtre (4) est en relation avec l'espace intérieur de logement (12) via l'admission (7).

4. Dispositif selon l'une des revendications 1 à 3,
**caractérisé en ce que**
la pièce de raccordement (16) et la bifurcation (11) sont conçues en tant que raccord en T (20), dans lequel la bifurcation (11) bifurque à angle droit avec la pièce de raccordement (16).

5. Dispositif selon l'une des revendications 1 à 4,
**caractérisé en ce que**
le raccord d'admission (21) de l'unité de purge (17) et le raccord d'admission (18) de l'unité de filtre (2) peuvent être reliés ensemble via un raccord TriClamp (19), via une bride intégrée ou un connecteur.

6. Dispositif selon l'une des revendications 1 à 5,
**caractérisé en ce que**
l'unité de purge (17) est configurée en tant que composante d'une seule pièce, laquelle composante comprend, en tant que composants solidement installés dans l'unité de purge (17), la conduite d'admission (10) pour l'admission (7) du logement (6) de l'unité de filtre (2), la valve d'admission (5), la pièce de raccordement (16), le raccord en T (20), la valve de filtre (4), la conduite de bifurcation (15), le filtre à air (3), le raccord pour le filtre à air (13) et le raccord d'admission (21) pour l'unité de purge (17).

7. Dispositif selon l'une des revendications 1 à 5,
**caractérisé en ce que**
la conduite d'admission (10) pour l'admission (7) du logement (6) de l'unité de filtre (2) et la valve d'admission (5) forment une composante séparée, laquelle peut être reliée, via le raccord en T (20) configuré en tant que composante séparée, à une autre composante séparée, laquelle comprend la conduite de bifurcation (15), la valve de filtre (4) et le filtre à air (3), dans lequel toutes les composantes peuvent être assemblées à l'unité de purge (17) via des raccords « TriClamp ».

8. Dispositif selon l'une des revendications 1 à 7,
**caractérisé en ce que**
l'unité de filtre (2) est conçue en tant que capsule de filtre à usage unique.

9. Dispositif selon l'une des revendications 1 à 8,
**caractérisé en ce que**
l'unité de purge (17) est conçue à usage unique.

10. Dispositif selon l'une des revendications 1 à 9,
**caractérisé en ce que**
le filtre à air (3) est conçu en tant que filtre stérile perméable au gaz.

11. Dispositif selon l'une des revendications 1 à 10,
**caractérisé en ce que**
le dispositif peut être stocké sous emballage stérile, stérilisé pour un usage unique.
